(19)

Europäisches
Patentamt
European
Patent Office
Office européen
des brevets

(11)    **EP 4 357 165 B1**

(12)    **EUROPEAN PATENT SPECIFICATION**

(45) Date of publication and mention
of the grant of the patent:
**26.02.2025   Bulletin 2025/09**

(51) International Patent Classification (IPC):
**B60C 11/12** (2006.01)

(52) Cooperative Patent Classification (CPC):
**B60C 11/1218;** B60C 2011/1213

(21) Application number: **23198327.1**

(22) Date of filing: **19.09.2023**

(54) **PNEUMATIC TIRE AND TIRE MOLD**

LUFTREIFEN UND REIFENFORM

PNEUMATIQUE ET MOULE POUR PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.10.2022   JP 2022166161**

(43) Date of publication of application:
**24.04.2024   Bulletin 2024/17**

(73) Proprietor: **TOYO TIRE CORPORATION**
**Itami-shi,**
**Hyogo 6640847 (JP)**

(72) Inventors:
• **KAMADA, Nobuyuki**
**Itami-shi 6640847 (JP)**
• **SATO, Keisuke**
**Itami-shi 6640847 (JP)**

(74) Representative: **Balder IP Law, S.L.**
**Paseo de la Castellana 93**
**5ª planta**
**28046 Madrid (ES)**

(56) References cited:
**EP-A1- 1 223 054**          **DE-A1- 102007 054 859**
**DE-A1- 102012 101 149**     **DE-A1- 102016 224 370**
**JP-A- 2003 118 322**

**Description**

TECHNICAL FIELD

The present invention relates to a pneumatic tire having a tread including blocks in which sipes are formed, and a tire mold for molding the pneumatic tire.

BACKGROUND

A pneumatic tire has a tread which is a portion that contacts a road surface. The tread includes a plurality of blocks. Each block has sipes formed therein. The sipes provide an edge effect and a water removing effect on icy and snowy roads. The sipes on the pneumatic tire are formed by using sipe blades arranged in a tire mold.

For example, JP 2003-118322 A discloses a technique of forming sipes such that the amplitude of a waveform of the sipe is gradually decreased from the block surface side toward the block bottom side in the tire radial direction. In addition, JP 2010-202009 A discloses a technique of forming depressions in a block surface of one of sipe walls and reducing a cross-sectional area of the depressions from the block surface side to the block bottom side in the tire radial direction.

However, the pneumatic tires disclosed in JP 2003-118322 A and JP 2010-202009 A have room for improvement with regard to braking performance on wet road surfaces and steering stability performance on dry road surfaces. EP 1 223 054 A1 discloses a tire running surface that comprises cutouts which form a zigzag or wavy tread pattern and incorporate the bounding surfaces of adjacent pointed body elements whose orientation alternates from cutout to cutout. DE 10 2007 054859 A1 discloses a pneumatic wherein a sipe inner wall surface of a sipe of the tire has a wavy first concave and convex row, a wavy second concave and convex row which is arranged at a distance from the first concave and convex row on a sipe bottom side, and a third concave and convex row which extends in a branched manner toward the sipe bottom side. DE 10 2016 224370 A1 discloses a pneumatic vehicle tire with a profiled tread which has two shoulder block rows with profile blocks, wherein in the profile blocks uniformly step-shaped or wave-shaped incisions are formed. DE 10 2012 101149 A1 discloses a pneumatic vehicle tire with a tread which is composed of profile elements, wherein at least one profile element is provided with a fine sipe which extends in the radial direction from the tread periphery into the profile element interior and which has corresponding fine sipe walls in the form of a sinusoidal wave.

SUMMARY

**In** consideration of the above, an object of the present invention to provide a pneumatic tire and a tire mold that can improve braking performance on wet road surfaces and improve steering stability performance on dry road surfaces.

A pneumatic tire according to the present invention has a tread including a block in which a sipe is formed. At least one wall surface of the sipe is formed in a waveform including a plurality of curved portions extending from a block surface side to a block bottom side when viewed from a tire radial direction. The curved portions include an inwardly curved portion that bulges toward the inside of the sipe and an outwardly curved portion that bulges toward the outside of the sipe. The radii of curvature of the inwardly curved portion and the outwardly curved portion are identical on the block surface side in the tire radial direction, and the radii of curvature of the inwardly curved portion and the outwardly curved portion differ on the block bottom side.

The pneumatic tire according to the present invention can improve braking performance on wet road surfaces and improve steering stability performance on dry road surfaces.

BRIEF DESCRIPTION OF DRAWINGS

Embodiments of the present disclosure will be described based on the following figures, wherein:

FIG. 1 is a schematic plane view showing blocks of a pneumatic tire according to an embodiment;

FIG. 2 is an enlarged view of a region A in FIG. 1;

FIG. 3 is an enlarged view of a region B in FIG. 2;

FIG. 4 is a schematic view showing waveforms on a block surface side and on a block bottom side;

FIG. 5 is a schematic view showing a tire mold according to an embodiment; and

FIG. 6 is a perspective view showing sipe blades according to the embodiment.

DESCRIPTION OF EMBODIMENTS

Embodiments of the present invention will be described in detail hereinafter. In the description below, specific shapes, materials, directions, numerical values, etc. are provided as illustrations for facilitating the understanding of the present invention, and can be appropriately changed according to applications, purposes, specifications, etc.

[Pneumatic Tire]

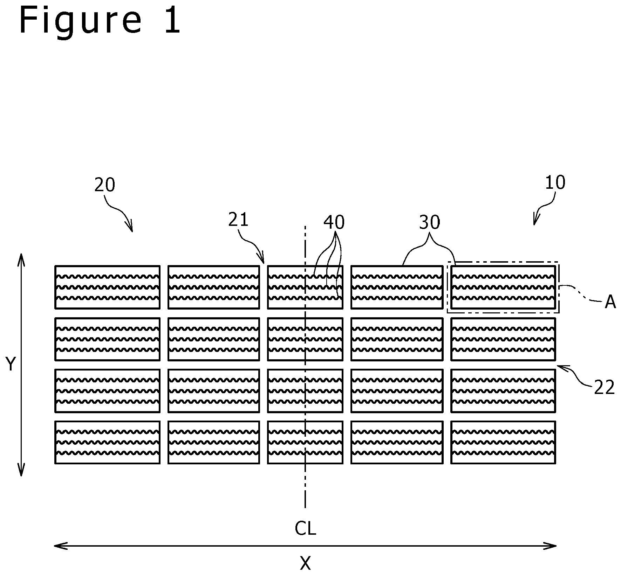

A pneumatic tire 10, which is an embodiment of the present invention, will be described with reference to FIG. 1.
As shown in FIG. 1, the pneumatic tire 10 has a tread 20 that includes blocks 30. The blocks 30 have sipes 40 formed therein. The pneumatic tire 10 makes it possible to improve braking performance on wet road surfaces and improve steering stability performance on dry surfaces (described in detail below).
Components of the pneumatic tire 10 will be described below with reference to a tire axial direction X, tire circumferential direction Y, and tire radial direction Z. The tire width may be described by using an equator CL with respect to the tire axial direction X. The tire depth in the tire radial direction Z may be described by using words "block surface side" and "block bottom side". The block surface and the block bottom are respectively labeled as SF and BM in the figures.
The tread 20 is a portion of the pneumatic tire 10 that contacts a road surface. The tread 20 has a plurality of blocks 30 separated by major grooves 21 and minor grooves 22. Each of the plurality of blocks 30 is formed to have a rectangular shape. The blocks closer to the equator CL in a plan view have a smaller length in the tire axial direction X. The blocks 30 are arranged into lines in the tread 20. The shape of the block 30 is not limited to this, and the block 30 may have a rhombic or parallelogram shape, as long as the blocks 30 are separated by the major grooves 21 and the minor grooves 22.
The major groove 21 is a groove that extends along the tire circumferential direction Y. The major groove 21 is formed linearly along the tire circumferential direction Y. The minor groove 22 is a groove that extends along the tire axial direction X. The minor groove 22 is formed linearly along the tire axial direction X. It should be noted that the major groove 21 and the minor groove 22 of the present embodiment are not limited to these shapes, and the major groove 21 may be formed at an angle to the tire circumferential direction Y, and the minor groove 22 may be formed at an angle to the tire axial direction X.

[Sipe]

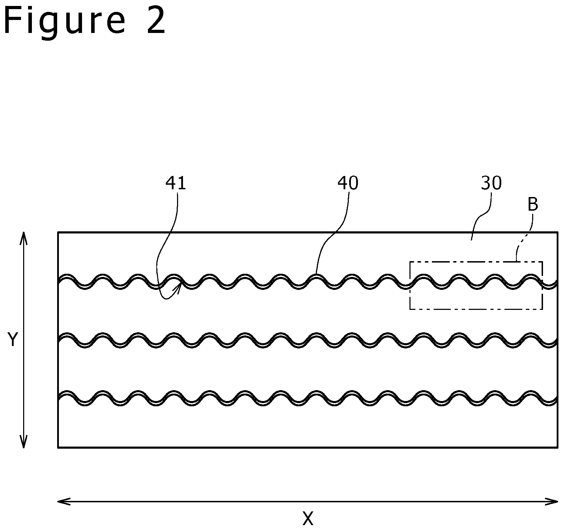

The sipes 40 will be described with reference to FIG. 2.
As shown in FIG. 2, the sipes 40 are formed in the block 30. The sipe 40 is a groove that extends along the tire axial direction X. Wall surfaces 41 of the sipe 40 are formed in a waveform along the tire axial direction X (described in detail below). For example, three sipes 40 are formed at equal intervals in the tire circumferential direction Y of the block 30. The depth of the groove of the sipe 40 is preferably 60 to 80% of the length of the block 30 in the tire radial direction Z.
The number and shape of the sipes 40 are not limited to those in the present embodiment, and three to five sipes 40 may be formed in the block 30. The sipes 40 may also be formed at an angle to the tire axial direction X. Furthermore, the sipes 40 may be open sipes that penetrate the sides of the block 30 or may be closed sipes that do not penetrate the sides of the block 30.
The sipes 40 soften the block 30 to increase the area of the surface that contacts the road surface, and thereby increase friction with the road surface. The sipes 40 also provide an edge effect and a water removing effect on an icy and snowy road. The edge effect is the effect of increasing grip by scratching the surface of the icy and snowy road with the corners of the blocks 30 or the sipes 40. The water removing effect is the effect of capturing water in a gap in the sipe 40 on the icy and snowy road.

[Waveform of Sipe]

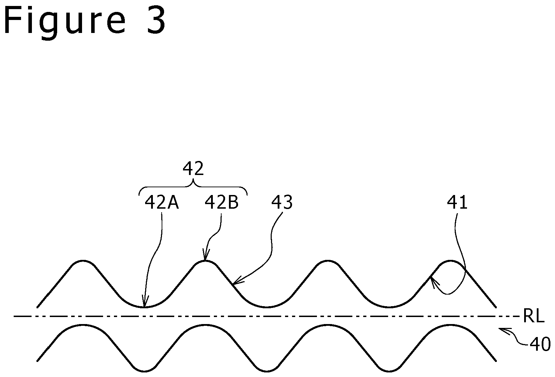

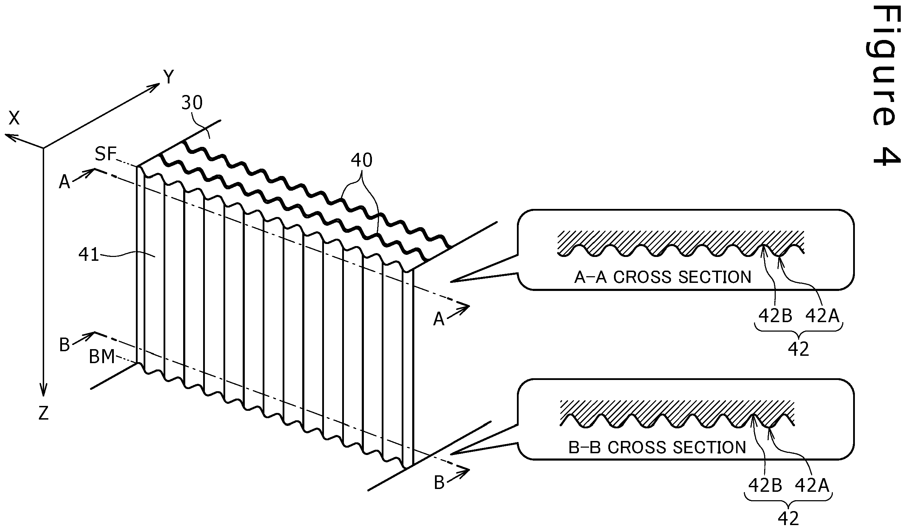

The waveform of the sipes 40 will be described with reference to FIGs. 3 and 4.
As shown in FIG. 3, the wall surfaces 41 of the sipe 40 are formed in a waveform from the block surface side to the block bottom side when viewed from the tire radial direction Z. In other words, the wall surfaces 41 of the sipe 40 are formed in a waveform in cross section, perpendicular to the tire radial direction Z. The wall surface 41 of the sipe 40 is a wall (surface) perpendicular to the tire circumferential direction Y of the sipe 40. By forming the wall surfaces 41 of the sipes 40 in a waveform, it is possible to further increase the above edge effect.
Although, in the present embodiment, one wall surface 41 and the other wall surface 41 of the sipe 40 are formed in a waveform, this is not limiting. Only the one wall surface 41 of the sipe 40 may be formed in a waveform, or only the other wall surface 41 of the sipe 40 may be formed in a waveform.

More specifically, in the present embodiment, the wall surfaces 41 of the sipe 40 are formed in a waveform including a plurality of curved portions 42 when viewed from the tire radial direction Z. The plurality of curved portions 42 include inwardly curved portions 42A that bulge toward the inside of the sipe 40 and outwardly curved portions 42B that bulge toward the outside of the sipe 40. The inwardly curved portions 42A and the outwardly curved portions 42B are arranged alternately to form the waveform. A straight portion 43 is also formed between the inwardly curved portion 42A and the outwardly curved portion 42B.

In other words, when a reference line RL is drawn at the center of the width of the sipe 40 (length in the tire circumferential direction Y) along the longitudinal direction of the sipe 40, the inwardly curved portion 42A is the curved portion 42 that bulges toward the reference line RL, and the outwardly curved portion 42B is the curved portion 42 that bulges toward the opposite side of the reference line RL.

As shown in FIG. 4, although the radius of curvature R1 of the inwardly curved portion 42A and the radius of curvature R2 of the outwardly curved portion 42B are identical on the block surface side in the tire radial direction Z (cross-section along line A-A in the figure), they differ from each other on the block bottom side (cross-section along line B-B in the figure). The waveform is thus continuously changed in the tire radial direction Z such that the radius of curvature R1 of the inwardly curved portion 42A and the radius of curvature R2 of the outwardly curved portion 42B that are identical to each other on the block surface side differ from each other on the block bottom side.

Here, assuming that the length of the sipe depth (from the block surface SF to the block bottom BM) is 100, the block surface side in the tire radial direction Z is preferably within a range of distance of 30 from the block surface SF. In addition, assuming that the length of the sipe depth is 100, the block bottom side in the tire radial direction Z is preferably within a range of distance of 70 from the block bottom BM.

On the block bottom side, the radius of curvature R1 of the inwardly curved portion 42A is formed to be larger than the radius of curvature R2 of the outwardly curved portion 42B. Here, a larger radius of curvature indicates that the curve is gentler.

More specifically, on the block bottom side, assuming that the distance between the center of the inwardly curved portion 42A and the center of the outwardly curved portion 42B (pitch of the waveform) is P (mm), the thickness of the sipe 40 (length in the tire circumferential direction) is t (mm), and that the radius of curvature of the inwardly curved portion 42A is R1 (mm), the following expression holds:

$$[\text{Expression 1}] \quad 0.5 * P - 0.5 * t \leq R1 \leq 0.6 * P$$

Here, if the radius of curvature R1 of the inwardly curved portion 42A is larger than 0.6 * P, the waveform becomes smaller and the binding force at the wall surfaces 41 of the sipe 40 becomes smaller, resulting in reduction in sipe inclination prevention performance. In addition, if the radius of curvature R1 of the inwardly curved portion 42A is smaller than 0.5 * P - 0.5 * t, a gap between the inwardly curved portion 42A and the outwardly curved portion 42B becomes smaller, resulting in reduction in braking performance on a wet road surface (described below).

Assuming that the radius of curvature of the outwardly curved portion 42B is R2 (mm), the radius of curvature R2 is within the range of the following expression:

$$[\text{Expression 2}] \quad 1.1 \leq R1 / R2 \leq 6.0$$

Furthermore, the radius of curvature R2 is preferably within the range of the following expression:

$$[\text{Expression 3}] \quad 1.5 \leq R1 / R2 \leq 4.0$$

Here, if the gap between the inwardly curved portion 42A and the outwardly curved portion 42B becomes too large, the binding force at the wall surfaces 41 of the sipe 40 becomes small.

[Effects]

The pneumatic tire 10 can improve braking performance on wet road surfaces and improve steering stability performance on dry road surfaces. More specifically, in the sipe 40 of the pneumatic tire 10, the radius of curvature R1 of the inwardly curved portion 42A and the radius of curvature R2 of the outwardly curved portion 42B of the waveform are formed to be identical to each other on the block surface side, and this makes it possible to increase stiffness (surface stiffness) of the block surface SF. On the other hand, the radius of curvature R1 of the inwardly curved portion 42A and the radius of curvature R2 of the outwardly curved portion 42B of the waveform are formed to differ from each other on the block bottom side of the sipe 40. This makes it possible to generate a gap in the sipe 40 to reduce the in-plane stiffness.

The increase in surface stiffness allows for increase in ground pressure per unit area of the block 30, thereby enhancing the driving force. On the other hand, the reduction in in-plane stiffness allows for increase in ground contact area of the block 30, removal of water from the wet road surface, and increase in coefficient of friction between the block 30 and the road surface, resulting in improvement in the braking performance of the pneumatic tire 10. As such, the pneumatic tire 10 can increase the surface stiffness and reduce the in-plane stiffness, thereby improving the braking performance on wet road surfaces and improving the steering stability performance on dry road surfaces.

[Tire Mold]

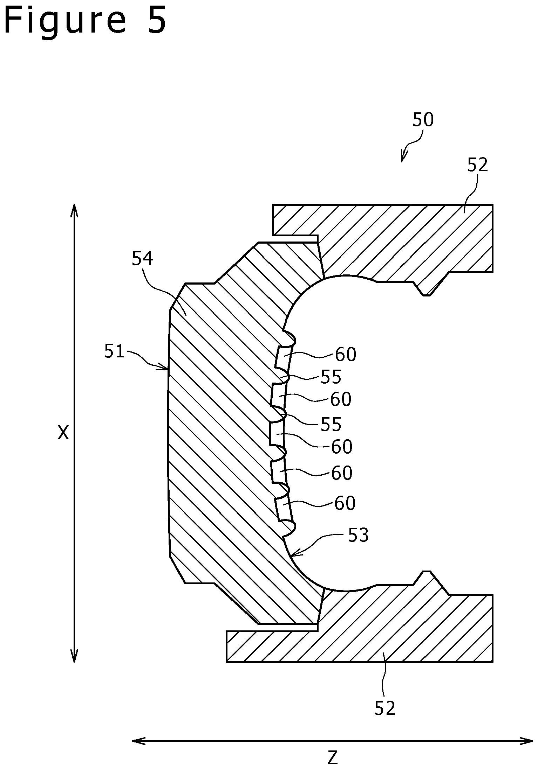

A tire mold 50, which is an embodiment of the present invention, will be described with reference to FIG. 5.

The mold 50 is a mold for forming the above pneumatic tire 10. The pneumatic tire 10 has the tread 20 including the blocks 30, in which the sipes 40 are formed as described above, and sidewalls (not shown) forming side surfaces. The mold 50 can be used to mold the pneumatic tire 10 that can improve braking performance on wet road surfaces and improve steering stability performance on dry surfaces.

Components of the mold 50 will be described below with reference to the tire axial direction X, the tire circumferential direction Y, and the tire radial direction Z of the above pneumatic tire 10 formed by the mold 50.

The mold 50 has a tread mold 51 for molding a surface of the tread 20 of the pneumatic tire 10 and a pair of side molds 52 for molding surfaces of the sidewalls.

The tread mold 51 has a body 54 having a tread forming surface 53, projections 55 protruding from the tread forming surface 53, and sipe blades 60 protruding from the tread forming surface 53 and provided between the projections 55.

The body 54 is made of a metallic material, such as aluminum alloy. The aluminum alloy preferably includes AC4 or AC7 aluminum, for example. The projections 55 are portions for molding the major grooves 21 in the pneumatic tire 10. The projections 55 are made of the same material as the body 54.

[Sipe Blade]

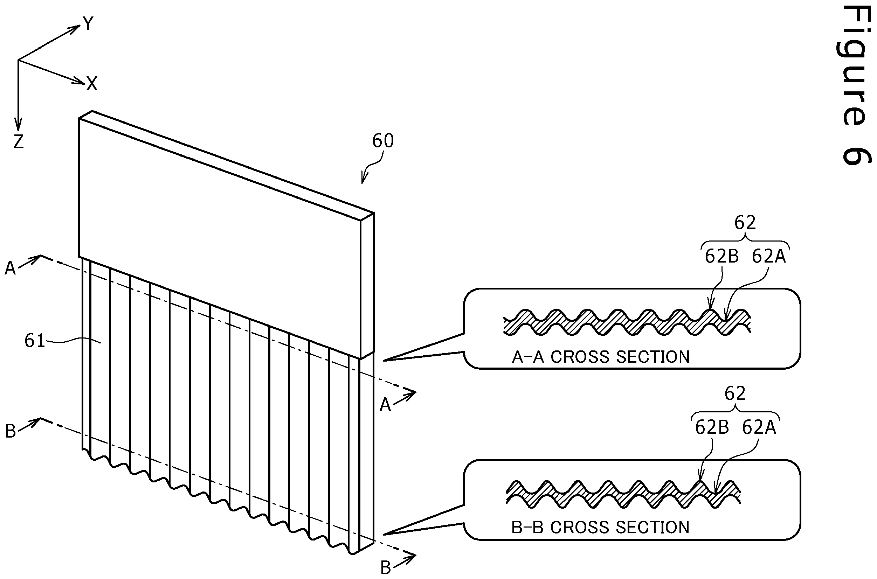

The sipe blade 60, which is an embodiment of the present invention, will be described with reference to FIG. 6.

The sipe blades 60 are provided for molding the sipes 40 in the pneumatic tire 10. The sipe blades 60 protrude in the tire radial direction Z from the tread forming surface 53 between the protrusions 55. The sipe blade 60 may be flat and made of a metallic material, such as stainless steel. The stainless steel preferably includes, for example, SUS303, SUS304, SUS630, and SUS631. When a three-dimensional molding machine is used, 17-4PH which is equivalent to SUS304L and SUS630 may be preferably used.

In general, a method of processing the sipe blade 60 includes forming the shape of the sipe blade 60 by using a press molding machine. To cause a change in shape of the sipe blade 60 in the thickness direction as in the sipe blade 60 of the present embodiment, the method may include cutting the sipe blade by machining. A three-dimensional molding machine may be used to make a complicated shape that is difficult to achieve by machining.

A side surface 61 of the sipe blade 60 is formed in a waveform when viewed from the tire radial direction Z. More specifically, the side surface 61 of the sipe blade 60 is formed in a waveform including a plurality of curved portions 62 when viewed from the tire radial direction Z. Here, the plurality of curved portions 62 include inwardly curved portions 62A that bulge toward the inside of the sipe blade 60 and outwardly curved portions 62B that bulge toward the outside of the sipe blade 60. The inwardly curved portions 62A and the outwardly curved portions 62B are arranged alternately to form the waveform.

Although the radius of curvature R1 of the inwardly curved portion 62A and the radius of curvature R2 of the outwardly curved portion 62B are identical on the block surface side in the tire radial direction Z (cross-section along line A-A in the figure), they differ from each other on the block bottom side (cross-section along line B-B in the figure). The waveform is thus continuously changed in the tire radial direction Z such that the radius of curvature R1 of the inwardly curved portion 62A and the radius of curvature R2 of the outwardly curved portion 62B that are identical to each other on the block surface side differ from each other on the block bottom side.

Here, assuming that the length of the sipe depth (from the block surface SF to the block bottom BM) is 100, the block surface side in the tire radial direction Z is preferably within a range of distance of 30 from the block surface SF. In addition, assuming that the length of the sipe depth is 100, the block bottom side in the tire radial direction Z is preferably within a range of distance of 70 from the block bottom BM.

On the block bottom side, the radius of curvature R1 of the inwardly curved portion 62A is formed to be larger than the radius of curvature R2 of the outwardly curved portion 62B.

[Examples]

The present invention will be further described by using examples, but the present invention is not limited to these examples.

<Comparative Example 1>

A pneumatic tire A1 (tire size: 205/55R16, rim size: 16 * 6.5 JJ) with sipes was made such that each sipe has curved portions on its wall surfaces as shown in FIGs. 1 to 4. The thickness t of a sipe, the pitch P of a waveform of a wall surface of the sipe, the radius of curvature of an inwardly curved portion on the block surface side $R_{SF}1$, the radius of curvature of an outwardly curved portion on the block surface side $R_{SF}2$, the radius of curvature of the inwardly curved portion on the block bottom side $R_{BM}1$, and the radius of curvature of the outwardly curved portion on the block bottom side $R_{BM}2$, are as follows:

Pitch of waveform P: 2.0 mm
Thickness of sipe t: 0.5 mm
Radius of curvature of the inwardly curved portion on the block surface side $R_{SF}1$: 0.75 mm
Radius of curvature of the outwardly curved portion on the block surface side $R_{SF}2$: 1.25 mm
Radius of curvature of the inwardly curved portion on the block bottom side $R_{BM}1$: 0.75 mm
Radius of curvature of the outwardly curved portion on the block bottom side $R_{BM}2$: 1.25 mm

<Comparative Example 2>

A pneumatic tire B2 was made in the same manner as Comparative Example 1, except that the radii of curvature of the inwardly curved portion on the block surface side $R_{SF}1$ and the outwardly curved portion on the block surface side $R_{SF}2$ were changed.

Pitch of waveform P: 2.0 mm
Thickness of sipe t: 0.5 mm
Radius of curvature of the inwardly curved portion on the block surface side $R_{SF}1$: 1.2 mm
Radius of curvature of the outwardly curved portion on the block surface side $R_{SF}2$: 0.75 mm
Radius of curvature of the inwardly curved portion on the block bottom side $R_{BM}1$: 0.75 mm
Radius of curvature of the outwardly curved portion on the block bottom side $R_{BM}2$: 1.25 mm

<Example 1>

A pneumatic tire A1 was made in the same manner as Comparative Example 1, except that the radius of curvature of the outwardly curved portion on the block surface side $R_{SF}2$ was changed.

Pitch of waveform P: 2.0 mm
Thickness of sipe t: 0.5 mm
Radius of curvature of the inwardly curved portion on the block surface side $R_{SF}1$: 0.75 mm
Radius of curvature of the outwardly curved portion on the block surface side $R_{SF}2$: 0.75 mm
Radius of curvature of the inwardly curved portion on the block bottom side $R_{BM}1$: 0.75 mm
Radius of curvature of the outwardly curved portion on the block bottom side $R_{BM}2$: 1.25 mm

<Example 2>

A pneumatic tire A2 was made in the same manner as Comparative Example 1, except that the radii of curvature of the inwardly curved portion on the block surface side $R_{SF}1$, the outwardly curved portion on the block surface side $R_{SF}2$, and the outwardly curved portion on the block bottom side $R_{BM}2$ were changed.

Pitch of waveform P: 2.0 mm
Thickness of sipe t: 0.5 mm
Radius of curvature of the inwardly curved portion on the block surface side $R_{SF}1$: 0.5 mm
Radius of curvature of the outwardly curved portion on the block surface side $R_{SF}2$: 0.5 mm
Radius of curvature of the inwardly curved portion on the block bottom side $R_{BM}1$: 0.75 mm
Radius of curvature of the outwardly curved portion on the block bottom side $R_{BM}2$: 0.5 mm

<Example 3>

A pneumatic tire A3 was made in the same manner as Comparative Example 1, except that the radii of curvature of the inwardly curved portion on the block surface side $R_{SF}1$, the outwardly curved portion on the block surface side $R_{SF}2$, and the outwardly curved portion on the block bottom side $R_{BM}2$ were changed.

Pitch of waveform P: 2.0 mm
Thickness of sipe t: 0.5 mm
Radius of curvature of the inwardly curved portion on the block surface side $R_{SF}1$: 0.3 mm
Radius of curvature of the outwardly curved portion on the block surface side $R_{SF}2$: 0.3 mm
Radius of curvature of the inwardly curved portion on the block bottom side $R_{BM}1$: 0.75 mm
Radius of curvature of the outwardly curved portion on the block bottom side $R_{BM}2$: 0.3 mm

<Example 4>

A pneumatic tire A4 was made in the same manner as Comparative Example 1, except that the radii of curvature of the inwardly curved portion on the block surface side $R_{SF}1$, the outwardly curved portion on the block surface side $R_{SF}2$, the inwardly curved portion on the block bottom side $R_{BM}1$, and the outwardly curved portion on the block bottom side $R_{BM}2$ were changed.

Pitch of waveform P: 2.0 mm
Thickness of sipe t: 0.5 mm
Radius of curvature of the inwardly curved portion on the block surface side $R_{SF}1$: 0.3 mm
Radius of curvature of the outwardly curved portion on the block surface side $R_{SF}2$: 0.3 mm
Radius of curvature of the inwardly curved portion on the block bottom side $R_{BM}1$: 1.2 mm
Radius of curvature of the outwardly curved portion on the block bottom side $R_{BM}2$: 0.3 mm

The pneumatic tires A1 to A4 and B1 and B2 were installed on all wheels of a test vehicle (front-wheel drive vehicle, displacement 2000cc) with an air pressure of 230 kPa, and braking performance on wet road surfaces and steering stability performance on dry road surfaces were evaluated by the following method. The evaluation results are shown in Table 1.

[Evaluation of Braking Performance on Wet Road Surface]

The above test vehicle was run on a wet road surface (asphalt road surface on which water was sprinkled), and the braking distance from an initial speed of 40 km/h was measured. In the results, numerical values obtained by dividing the braking distances of Comparative Example 2 and Examples by the braking distance of Comparative Example 1 and multiplying the reciprocals of the obtained values by 100 are indicated as indexes. The larger the index, the shorter the braking distance and the better the braking performance on the wet road surface.

[Evaluation of Steering Stability Performance on Dry Road Surface]

The steering stability performance was evaluated based on the driver's perception when the test vehicle was driven on a dry road surface. The results were compared with steering stability performance of Comparative Example 1 and evaluated in seven levels: "much worse", "worse", "somewhat worse", "equal", "somewhat better", "better", and "much better".

[Table 1]

| | | Comparative Example 1 | Comparative Example 2 | Example 1 | Example 2 | Example 3 | Example 4 |
|---|---|---|---|---|---|---|---|
| P | | 2.0 | 2.0 | 2.0 | 2.0 | 2.0 | 2.0 |
| t | | 0.5 | 0.5 | 0.5 | 0.5 | 0.5 | 0.5 |
| Block surface side | $R_{SF}1$ | 0.75 | 1.2 | 0.75 | 0.5 | 0.3 | 0.3 |
| | $R_{SF}2$ | 1.25 | 0.75 | 0.75 | 0.5 | 0.3 | 0.3 |

(continued)

| | | Comparative Example 1 | Comparative Example 2 | Example 1 | Example 2 | Example 3 | Example 4 |
|---|---|---|---|---|---|---|---|
| Block bottom side | $R_{BM}1$ | 0.75 | 0.75 | 0.75 | 0.75 | 0.75 | 1.2 |
| | $R_{BM}2$ | 1.25 | 1.25 | 1.25 | 0.5 | 0.3 | 0.3 |
| Braking performance on wet road surface | | 100 | 99 | 100 | 102 | 103 | 103 |
| Steering stability performance on dry road surface | | | Worse | Somewhat better | Somewhat better | Somewhat better | Equal |

As shown in Table 1, Comparative Example 1 adopted a general waveform sipe.

In Comparative Example 2, on the block surface side of the sipe, the radii of curvature of the inwardly curved portion and the outwardly curved portion of the waveform differ from each other, and the sipe does not close, resulting in reduced surface stiffness and thus reduced steering stability performance on the dry road surface.

In Example 1, on the block surface side of the sipe, the radii of curvature of the inwardly curved portion and the outwardly curved portion of the waveform are identical to each other, and on the block bottom side, the radii of curvature of the inwardly curved portion and the outwardly curved portion of the waveform are identical to those in Comparative Example 1. This increases the surface pressure when the sipes are inclined and increases the surface stiffness, resulting in improved steering stability performance on the dry road surface.

In Examples 2 and 3, the radii of curvature of the inwardly and outwardly curved portions on the block surface side are smaller than those in Example 1, and this allows for higher surface stiffness and thus improved steering stability performance on the dry road surface. Further, in Examples 2 and 3, the size relationship between the radii of curvature of the inwardly curved portion and the outwardly curved portion on the block bottom side is opposite to those in Comparative Examples 1 and 2 and Example 1. This reduces the in-plane stiffness and increases the ground contact area, resulting in improved braking performance on the wet road surface.

Although Example 4 has an effect similar to those in Examples 2 and 3, the in-plane stiffness is lower than Examples 2 and 3, and thus the steering stability performance on the dry road surface is reduced.

The present invention is not limited to the above embodiments and variations thereof but only by the appended claims.

## Claims

1. A pneumatic tire (10) having a tread (20) comprising a block (30) in which a sipe (40) is formed, wherein

   at least one wall surface (41) of the sipe (40) is formed in a waveform including a plurality of curved portions (42) extending from a block surface side to a block bottom side when viewed from a tire radial direction (Z),
   the curved portions (42) include an inwardly curved portion (42A) that bulges toward the inside of the sipe (40) and an outwardly curved portion (42B) that bulges toward the outside of the sipe (40), and
   the radii of curvature of the inwardly curved portion (42A) and the outwardly curved portion (42B) are identical on the block surface side in the tire radial direction (Z), **characterized in that** the radii of curvature of the inwardly curved portion (42A) and the outwardly curved portion (42B) differ on the block bottom side in the tire radial direction (Z).

2. The pneumatic tire (10) according to Claim 1, wherein the radius of curvature of the inwardly curved portion (42A) is larger than that of the outwardly curved portion (42B) on the block bottom side.

3. The pneumatic tire (10) according to Claim 1 or 2, wherein, on the block bottom side, assuming that the pitch of the waveform is P (mm), the thickness of the sipe (40) is t (mm), and that the radius of curvature of the inwardly curved portion (42A) is R1 (mm), the following expression holds:

$$[\text{Expression 1}] \quad 0.5 * P - 0.5 * t \leq R1 \leq 0.6 * P$$

4. The pneumatic tire (10) according to Claim 3, wherein, on the block bottom side, assuming that the radius of curvature of the outwardly curved portion (42B) is R2 (mm), the following expression holds:

$$[\text{Expression 2}] \qquad 1.1 \leq R1 / R2 \leq 6.0$$

**5.** A tire mold (50) with a sipe blade (60) for forming a sipe (40) in a block (30) of a tread (20) of a pneumatic tire (10), wherein

at least one side surface (61) of the sipe blade (60) is formed in a waveform including a plurality of curved portions (62) when viewed from a tire radial direction (Z),
the curved portions (62) include an inwardly curved portion (62A) that bulges toward the inside of the sipe blade (60) and an outwardly curved portion (62B) that bulges toward the outside of the sipe blade (60), and
the radii of curvature of the inwardly curved portion (62A) and the outwardly curved portion (62B) are identical on a block surface side in the tire radial direction, **characterized in that** the radii of curvature of the inwardly curved portion (62A) and the outwardly curved portion (62B) differ on a block bottom side.

**Patentansprüche**

**1.** Luftreifen (10) mit einer Lauffläche (20), die einen Profilblock (30) aufweist, in dem eine Lamelle (40) ausgebildet ist, wobei

mindestens eine Wandfläche (41) der Lamelle (40) in einer Wellenform ausgebildet ist, die eine Mehrzahl von gekrümmten Abschnitten (42) einschließt, die sich von einer Profilblock-Oberflächenseite zu einer Profilblock-Bodenseite erstrecken, wenn man sie von einer radialen Richtung (Z) des Reifens betrachtet,
die gekrümmten Abschnitte (42) einen nach innen gekrümmten Abschnitt (42A), der sich in Richtung der Innenseite der Lamelle (40) wölbt, und einen nach außen gekrümmten Abschnitt (42B), der sich in Richtung der Außenseite der Lamelle (40) wölbt, umfassen, und
die Krümmungsradien des nach innen gekrümmten Abschnitts (42A) und des nach außen gekrümmten Abschnitts (42B) auf der Blockoberflächenseite in der radialen Richtung (Z) des Reifens identisch sind, **dadurch gekennzeichnet, dass** die Krümmungsradien des nach innen gekrümmten Abschnitts (42A) und des nach außen gekrümmten Abschnitts (42B) auf der Blockunterseite in der radialen Richtung (Z) des Reifens unterschiedlich sind.

**2.** Luftreifen (10) nach Anspruch 1, wobei der Krümmungsradius des nach innen gekrümmten Abschnitts (42A) größer ist als der des nach außen gekrümmten Abschnitts (42B) auf der Profilblock-Unterseite.

**3.** Luftreifen (10) nach Anspruch 1 oder 2, wobei auf der Profilblock-Unterseite unter der Annahme, dass der Pitch der Wellenform P (mm) ist, die Dicke der Lamelle (40) t (mm) ist, und dass der Krümmungsradius des nach innen gekrümmten Abschnitts (42A) R1 (mm) ist, der folgende Ausdruck gilt:

$$[\text{Ausdruck 1}] \quad 0{,}5 * P - 0{,}5 * t \leq R1 \leq 0{,}6 * P$$

**4.** Luftreifen (10) nach Anspruch 3, wobei auf der Profilblock-Unterseite unter der Annahme, dass der Krümmungsradius des nach außen gekrümmten Abschnitts (42B) R2 (mm) beträgt, der folgende Ausdruck gilt:

$$[\text{Ausdruck 2}] \quad 1{,}1 \leq R1 / R2 \leq 6{,}0$$

**5.** Reifenform (50) mit einem Lamellenblatt (60) zum Formen einer Lamelle (40) in einem Profilblock (30) einer Lauffläche (20) eines Luftreifens (10), wobei

mindestens eine Seitenfläche (61) des Lamellenblatts (60) in einer Wellenform ausgebildet ist, die eine Mehrzahl von gekrümmten Abschnitten (62) enthält, wenn man sie von einer radialen Richtung (Z) des Reifens aus betrachtet,
die gekrümmten Abschnitte (62) einen nach innen gekrümmten Abschnitt (62A), der sich zur Innenseite des Lamellenblatts (60) hin wölbt, und einen nach außen gekrümmten Abschnitt (62B), der sich zur Außenseite des Lamellenblatts (60) hin wölbt, umfassen, und

die Krümmungsradien des nach innen gekrümmten Abschnitts (62A) und des nach außen gekrümmten Abschnitts (62B) auf einer Blockoberflächenseite in der radialen Richtung des Reifens identisch sind, **dadurch gekennzeichnet, dass** die Krümmungsradien des nach innen gekrümmten Abschnitts (62A) und des nach außen gekrümmten Abschnitts (62B) auf einer Blockunterseite unterschiedlich sind.

**Revendications**

1. Pneumatique (10) ayant une bande de roulement (20) comprenant un bloc (30) dans lequel est formée une lamelle (40),

   au moins une surface de paroi (41) de la lamelle (40) est réalisée en forme d'onde comprenant une pluralité de parties incurvées (42) s'étendant depuis un côté surface du bloc jusqu'à un côté fond du bloc lorsqu'elles sont considérées selon une direction radiale du pneu (Z),
   les parties incurvées (42) comprennent une partie incurvée vers l'intérieur (42A) qui est bombée vers l'intérieur de la lamelle (40) et une partie incurvée vers l'extérieur (42B) qui est bombée vers l'extérieur de la lamelle (40), et
   les rayons de courbure de la partie incurvée vers l'intérieur (42A) et de la partie incurvée vers l'extérieur (42B) sont identiques du côté surface du bloc dans la direction radiale du pneu (Z), **caractérisé en ce que** les rayons de courbure de la partie incurvée vers l'intérieur (42A) et de la partie incurvée vers l'extérieur (42B) diffèrent du côté fond du bloc dans la direction radiale du pneu (Z).

2. Pneumatique (10) selon la revendication 1, dans lequel le rayon de courbure de la partie incurvée vers l'intérieur (42A) est plus grand que celui de la partie incurvée vers l'extérieur (42B) du côté fond du bloc.

3. Pneumatique (10) selon la revendication 1 ou 2, dans lequel, du côté du fond du bloc, en posant que le pas de la forme d'onde est P (mm), l'épaisseur de la lamelle (40) est t (mm), et le rayon de courbure de la portion incurvée vers l'intérieur (42A) est R1 (mm), l'expression suivante s'applique :

$$[\text{Expression 1}] \qquad 0,5 * P - 0,5 * t \leq R1 \leq 0,6 * P.$$

4. Pneumatique (10) selon la revendication 3, dans lequel, du côté fond du bloc, en posant que le rayon de courbure de la partie courbée vers l'extérieur (42B) est R2 (mm), l'expression suivante s'applique :

$$[\text{Expression 2}] \qquad 1,1 \leq R1 / R2 \leq 6,0.$$

5. Moule à pneu (50) avec une lame de lamelle (60) pour former une lamelle (40) dans un bloc (30) d'une bande de roulement (20) d'un pneumatique (10), dans lequel

   au moins une surface latérale (61) de la lame de lamelle (60) est réalisée en forme d'onde comprenant une pluralité de parties incurvées (62) lorsqu'elle est considérée selon une direction radiale du pneu (Z),
   les parties incurvées (62) comprennent une partie incurvée vers l'intérieur (62A) qui est bombée vers l'intérieur de la lame de lamelle (60) et une partie incurvée vers l'extérieur (62B) qui est bombée vers l'extérieur de la lame de lamelle (60), et
   les rayons de courbure de la partie incurvée vers l'intérieur (62A) et de la partie incurvée vers l'extérieur (62B) sont identiques du côté surface du bloc dans la direction radiale du pneu, **caractérisé en ce que** les rayons de courbure de la partie incurvée vers l'intérieur (62A) et de la partie incurvée vers l'extérieur (62B) diffèrent du côté fond du bloc.

# Figure 1

# Figure 2

# Figure 3

# Figure 4

# Figure 5

# Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003118322 A
- JP 2010202009 A
- EP 1223054 A1
- DE 102007054859 A1
- DE 102016224370 A1
- DE 102012101149 A1